# EUROPEAN PATENT SPECIFICATION

(11) **EP 1 412 160 B1**
(45) Date of publication and mention of the grant of the patent: **07.11.2007**
(21) Application number: 02711065.9
(22) Date of filing: 11.02.2002
(51) Int. Cl.: B29C 51/10, E01C 9/00

(54) **FORMER AND METHOD OF MAKING THE SAME**
FORM UND HERSTELLVERFAHREN FÜR DIE FORM
MOULE ET SON PROCEDE DE PRODUCTION

(30) Priority: 09.02.2001 GB 0103292
(43) Date of publication of application: 28.04.2004
(73) Proprietor: Grass Concrete Limited, Wakefield, West Yorkshire WF1 2QP (GB)
(72) Inventor: HOWDEN, Robert Ellis, Stanley, Wakefield WF3 4HX (GB)
(74) Representative: Kemp, Paul Geoffrey
(86) International application number: PCT/GB2002/000598
(87) International publication number: WO 2002/064349

(56) References cited:
- GB-A- 2 040 214
- US-A- 3 802 790
- US-A- 4 331 628
- US-A- 4 702 048
- US-A- 4 944 907

## Description

### BACKGROUND OF THE INVENTION

### Field of the Invention

The present invention relates in general to formers primarily for use in the construction of pavement-like sites, in particular formers which are void forming moulds for the construction of concrete surfaces. More particularly, the invention relates to a process of making such a former.

### Description of the Prior Art

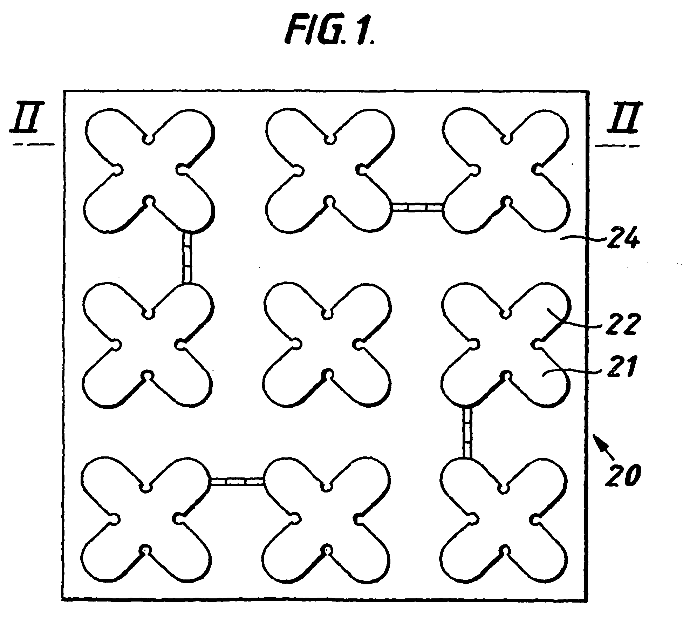

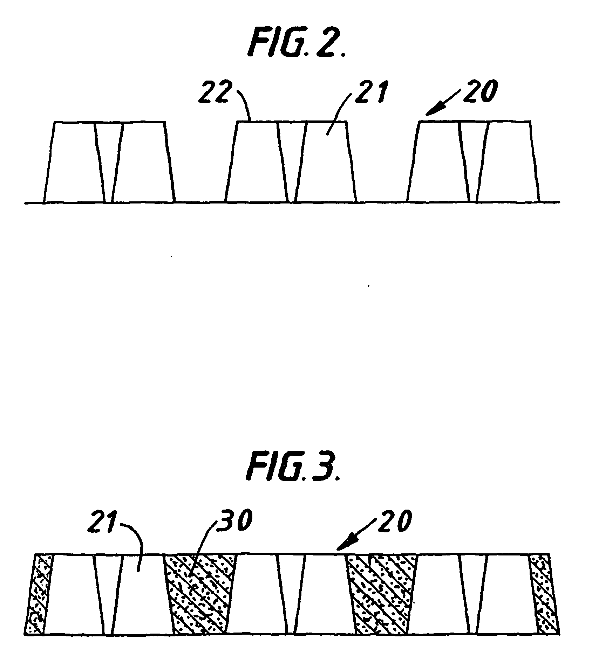

A typical state of the art former (20) e.g. known from US-A-3,802,790 is shown in Figures 1 to 3. The former (20) is composed of a plurality of shaped hollow bodies or projections (21) each closed at one end (22). The projections (21) are interconnected by a base sheet (24) and are open at the end adjacent the base sheet (24). The projections (21) are used to shape a formable site material. Such formers (20) are made from a web of plastic sheet material which is subjected to heating and vacuum forming to assume the shape shown. During construction of a site, one or more formers are placed on the site with the closed ends (22) of the projections (21) uppermost. A formable site material such as concrete (30) is then poured onto the former (20) so as to fill the apertures or gaps between the projections (21) up to or close to the level of the closed ends (22) as shown in Figure 3. When the site material is set the exposed closed ends (22) of the formers (20) are removed, conveniently burned away, to reveal voids extending through to the underlying base. The resultant voids in the site material may then be filled with a further site material, such as soil, which allows grass or other plants to be grown within the voids. It is a disadvantage of the art that during the step of pouring the site material a fine film of the site material may coat the uppermost closed ends (22) of the former. This film then hampers the burning of the closed end of the bodies.

After manufacture the individual formers (20) are placed in a stack and nested together. It is a disadvantage of the art that as a result of the plan and sectional profile (Figures 1 and 2) the formers (20) are susceptible to binding while nested making separation difficult. The problem is compounded by transportation and handling which serves to compress the formers (20) further into the nest. This requires that the formers (20) will be nested with a sufficient gap between their bases, typically 18mm, to allow for subsequent compression, resulting in a reduction in deliverable quantities.

It is thus the aim of the present invention to provide an improved former for use in the construction of pavement like sites.

### STATEMENT OF INVENTION

According to a first aspect of the present invention there is provided a process of manufacturing a former (2) for use in the construction of pavement sites according to claim 1.

According to a second aspect of the invention there is provided a former (2) for use in the construction of pavement like sites according to claim 6.

According to a third aspect of the present invention there is provided a method of constructing a pavement like site utilising a former according to claim 8.

According to another embodiment of the invention the silicone emulsion can alternatively be applied after the heating stage. The temperature of the plastic must be limited to above 60°C and below 80°C. In this aspect the invention thus provides a process of manufacturing a former which comprises the steps of heating and vacuum forming a sheet of thermo- plastic into a desired former shape with at least one shaped hollow body closed at one end and spraying the former with an emulsion, preferably a silicone emulsion, whilst the shaped former is still at an elevated temperature to create a coating. The coating preferably provides anti-static and anti-adhesive qualities to the coated surface and may be a silicone emulsion.

The invention may be understood more readily, and various other features of the invention may become apparent, from consideration of the following description.

### BRIEF DESCRIPTION OF DRAWINGS

Figure 1 is a plan view of a typical former;
Figure 2 is a section view of the former, the view being taken along the line II- II of Figure 1.
Figure 3 is a view corresponding to Figure 2 and shows the use of the former in creating a site; and
Figure 4 is a schematic representation of the process for manufacturing a former in accordance with the invention.

A preferred embodiment of the present invention will now be described by way of example only.

### DETAILED DESCRIPTION OF PREFERRED EMBODIMENT

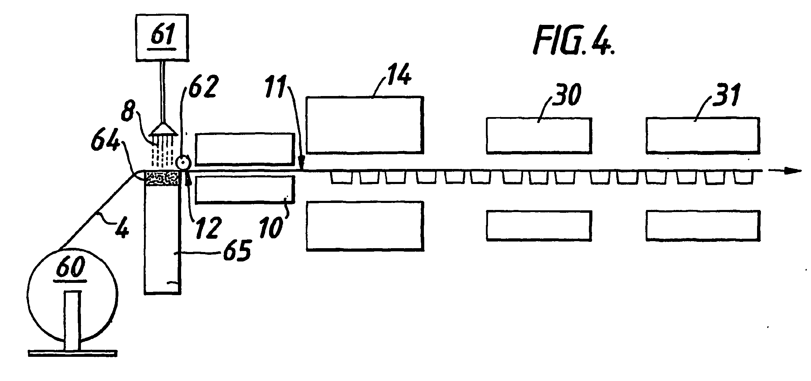

As represented in Figure 4 a continuously driven sheet or web (4) made, for example, of recycled high impact styrene with a thickness of between (1.14 x 10-3) metres to (1.70 x 10-3) metres is drawn off from a reel (60) and is guided though the various process stages. Initially the sheet (4) is coated on at least one surface (12) with an aqueous silicone emulsion (8). As illustrated, the sheet (4) is coated on both upper and lower surfaces. Emulsion (8) is stored in a header tank (61) and sprayed onto the upper surface (11). An additional supply of emulsion (8) in a reservoir (65) is dispensed with a sponge wiper (64) to coat the lower surface (12) evenly. Alternatively a pump mechanism can be employed to spray the aqueous silicone emulsion so that it may be stored remotely. The sheet (4) is guided by a roller (62) and then passed through a heater unit (10) which heats the sheet (4) in preparation for vacuum-forming. The heating step raises the temperature of the sheet (4) to around 150°C. The heating step also causes evaporation of the aqueous content of the silicone emulsion (8) leaving a micro-granular coating of silicone on the previously coated surfaces (11, 12) of the sheet. The resultant micro-granular coating gives the coated surfaces (11, 12) significant anti-static and anti- adhesive properties without there being a detectable film coating. The sheet is then vacuum formed by tools (14) into the shape previously described in connection with Figures 3 to 5.

The shaped sheet is optionally subjected to a perforation- forming punching operation at a punching station (30) to sub- divide the sheet into pre- determined areas corresponding to individual formers and at a final guillotine station (31) the sheet is severed into individual formers.

A number of variants can be adopted, for example the emulsion (8) can be applied on selected areas of the sheet. It is preferred to apply the emulsion prior to heating but it is possible to locate the coating equipment after the tooling (14). In this case, however, the emulsion (8) is applied to the sheet which is still at an elevated temperature and there is a more restricted range of temperatures at which the emulsion (8) can be successfully applied. Usually the elevated temperature of the sheet should not be outside the range of 60- 80°C.

Whichever location is adopted for the coating equipment the formers which are produced overcome the problems discussed hereinbefore. Firstly during use the closed ends (22) of the projections (21) present the coating and inhibit the site material from attaching itself to the closed ends (22). Secondly the coating inhibits the formers from becoming fixed together when stacked. In this connection the minimum gap of 18mm between the base sheets can be considerably less (10mm or less) and engaging surfaces of the formers do not tend to adhere or lock together. Typically a nest of formers would occupy a cube of 600mm x 600mm x 1000mm. This same volume can now hold 80% more formers which greatly reduces storage and transport costs.

There is thus provided a plastic former of the type already discussed which has a micro-granular coating of silicone on at least one of its surfaces or part of it's surface area giving significantly anti-static and anti-adhesive qualities to that surface or surface area. The anti-static and anti-adhesive qualities provided by the silicone coating help to prevent binding of the formers when nested together enabling rapid de-nesting of the packed formers; preventing over-compaction of the formers within the nest and enabling a greater number of formers to be contained within each nest. These properties also help to prevent unwanted adhesion of the filling site material i.e. concrete, to the former preventing a film covering the closed ends of the bodies and hampering of the burning of the closed ends.

## Claims

1. A process of manufacturing a former (2) for use in the construction of pavement sites comprising the steps of:
providing a continuous sheet of thermo-plastic (4)
driving the sheet of thermo plastic via a belt,
coating at least some of the surface area of the sheet of thermoplastic (4) with a substance,
heating the coated thermoplastic sheet (4)
vacuum forming the heated thermoplastic sheet into a desired former shape comprising at least one shaped hollow body closed at one end;
whereby the coating provides anti-static and anti-adhesive qualities to the coated surface.

2. A process according to claim 1 wherein the step of coating comprises spraying.

3. A process according to claim 1 or claim 2 wherein the coating comprises an aqueous silicone emulsion.

4. A process according to any one of the preceding claims wherein the coating comprises micro-granular silicone.

5. A process according to any one of the preceding claims wherein the desired former shape comprises a plurality of shaped hollow bodies.

6. A former (2) for use in the construction of pavement like sites manufactured according to the process of claim 1, wherein the coating comprises micro granular silicone.

7. A method of constructing a pavement like site utilising a former in accordance with claim 6.

## Patentansprüche

1. Verfahren zur Herstellung einer Schablone (2) zur Verwendung bei der Konstruktion von Fahrbahnseiten, aufweisend die Schritte:
Bereitstellung einer kontinuierlichen Lage eines thermoplastischen Materials (4),
Befördern der Lage aus thermoplastischem Material mittels eines Gurtes,
Beschichten des Oberflächenbereiches der Lage aus thermoplastischem Material (4) mit einer Substanz,
Erwärmen der thermoplastischen Lage (4),
Vakuumformen der erwärmten thermoplstischen Lage in eine gewünschte Schablonenform, aufweisend wenigstens einen hohlen geformten Körper, der an einem Ende geschlossen ist,
wobei die Beschichtung der beschichteten Oberfläche antistatische und antiadhäsive Qualitäten verleiht.

2. Verfahren nach Anspruch 1, wobei der Beschichtungsschritt Sprühen beinhaltet.

3. Verfahren nach Anspruch 1 oder 2, wobei die Beschichtung eine wässrige Silikonemulsion aufweist.

4. Verfahren nach einem der vorhergehenden Ansprüche, wobei die Beschichtung mikrogranulares Silikon aufweist.

5. Verfahren nach einem der vorhergehenden Ansprüche, wobei die gewünschte Schablonenform eine Mehrzahl an geformten hohlen Körpern aufweist.

6. Schablone (2) zur Verwendung bei der Konstruktion von fahrbahnähnlichen Seiten, hergestellt nach dem Prozeß nach Anspruch 1, wobei die Beschichtung mikrogranulares Silikon aufweist.

7. Verfahren zur Konstruktion einer fahrbahnähnlichen Seite unter Verwendung einer Schablone gemäß Anspruch 6.

## Revendications

1. Procédé de fabrication d'un gabarit (2) à utiliser dans la construction de sites de revêtements routiers, comprenant les stades dans lesquels :
on se procure une feuille continue de matière thermoplastique (4)
on entraîne la feuille de matière thermoplastique par une courroie,
on revêt au moins une partie de la surface de la feuille de matière thermoplastique (4) d'une substance,
on chauffe la feuille (4) de matière thermoplastique revêtue,
on donne à la feuille de matière thermoplastique chauffée une forme souhaitée de gabarit comprenant au moins un corps creux conformé fermé à une extrémité ;
le revêtement donnant des qualités antistatiques et anti-adhésives à la surface revêtue.

2. Procédé suivant la revendication 1, dans lequel le stade de revêtement comprend une projection.

3. Procédé suivant la revendication 1 ou la revendication 2, dans lequel le revêtement comprend une émulsion aqueuse de silicone.

4. Procédé suivant l'une quelconque des revendications précédentes, dans lequel le revêtement comprend une silicone micro-granulée.

5. Procédé suivant l'une quelconque des revendications précédentes, dans lequel la forme souhaitée de gabarit comprend une pluralité de corps creux conformés.

6. Gabarit (2) à utiliser dans la construction de sites analogues à des revêtements routiers, fabriqué par le procédé suivant la revendication 1, dans lequel le revêtement comprend une silicone micro-granulée.

7. Procédé de construction d'un site analogue à un revêtement routier, en utilisant un gabarit suivant les revendication 6.
